(19)

Europäisches Patentamt

European Patent Office

Office européen des brevets

(11) **EP 2 608 002 A1**

(12) **EUROPEAN PATENT APPLICATION**

(43) Date of publication:
**26.06.2013 Bulletin 2013/26**

(51) Int Cl.:
*G06F 3/048* (2013.01)        *G06F 15/02* (2006.01)
*G06F 17/27* (2006.01)        *G09B 17/00* (2006.01)

(21) Application number: **11306734.2**

(22) Date of filing: **21.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **FRANCE TELECOM**
**75015 Paris (FR)**

(72) Inventors:
• **Rong, Letian**
  **Tokyo, 160-0022 (JP)**
• **Auvray, Vincent**
  **14066 Caen (FR)**

(54) **Method for determining a reading speed of a section of an electronic content**

(57) The invention relates to a method for determining a reading speed of a section of an electronic content comprising at least one section consisting of words, the method comprising the steps of :
- a reading speed and a words count of at least a first section of the electronic content being already known, determining a time for reading the first section, called first reading time,
- calculating a difference, called time difference, between a time for reading the whole electronic content and at least the first reading time,
- determining a reading speed for a second section of the electronic content by dividing a words count for the second section by the time difference.

**Fig. 2**

Printed by Jouve, 75001 PARIS (FR)

EP 2 608 002 A1

**Description**

The present invention generally relates to e-book readers, and more particularly to e-books readers embedding assisted reading functionalities.

E-books readers are software functions, or applications, that are embedded on electronic devices such as tablets, smart phones, personal computers, laptops etc. capable of displaying electronic contents consisting of texts such as books, newspapers, etc. Some e-books applications comprise a feature called assisted reading. Assisted reading feature guides the reader's eyes by highlighting part of the text on the current displayed electronic content. Such a highlight moves in a single direction, i.e., from left to right for western texts and from top to bottom for Asian texts with a predefined speed measured in words per minute or wpm and therefore helps to reduce the natural regression occurring in the user's eyes. Hence, it helps increase the overall reading speed of the user. Generally, the assisted reading feature is switched on by the user when they desire the feature during reading an electronic content.

An assisted reading feature provides a set of predefined reading speed for the moving highlight, i.e. 100 wpm, 200 wpm etc. However, this requires the user to try out several different reading speeds before finding an appropriate reading speed for assisted reading.

There is a need to provide a method allowing a user to easily and conveniently determine an appropriate reading speed to be used in an assisted reading feature.

To that extend, the present invention relates to a method for determining a reading speed of a section of an electronic content comprising at least one section consisting of words, the method comprising the steps of :

- a reading speed and a words count of at least a first section of the electronic content being already known, determining a time for reading the first section, called first reading time,

- calculating a difference, called time difference, between a time for reading the whole electronic content and at least the first reading time,

- determining a reading speed for a second section of the electronic content by dividing a words count for the second section by the time difference.

The solution of the invention allows the calculation of several differentiated reading speeds associated to different sections of the electronic content, such as dialogs sections, poem sections, description sections, etc.

Thus, when the user launches the assisted reading feature for the electronic content, these different reading speeds are used by the e-books reader application when moving the highlight in order to provide finer granularity when displaying the electronic content, enhancing the quality of experience of the user.

It is assumed that the electronic content has been already categorized beforehand, i.e., the electronic content has been split in different sections corresponding to different reading material such as dialog, description, poem, etc. These sections are then categorized in a recognizable metadata format, such as the ePub international standard with XML tags. Such a categorization of the electronic content can be realized by the editor of the electronic content.

In the method of the invention, the time difference is the difference between the time for reading the whole electronic content and a sum of the reading times of the sections of the electronic content for which a reading speed is known.

By taking into account the reading speeds of the sections for which the reading speed is already known, the accuracy of the reading speed of the second section determined according to the method of the invention is increased.

In the method of the invention, the words count to be divided by the time difference is the result of a sum of a words count of the sections of the electronic content for which a reading speed is to be determined.

By taking into account the word counts of the sections for which the reading speed is to be determined, the accuracy and reliability of the reading speed of the second section determined according to the method of the invention is increased.

The method of the invention further comprises, prior to determining the reading speed of a section of the electronic content, the step of determining the value of a parameter representing the abnormality of the reading speed of the first section of the electronic content by comparing a difference between the reading speed of the first section with an average reading speed for the first section, with a predetermined threshold, if the value of the difference is below the predetermined threshold, the value of the parameter is set to false; the determining the value of the parameter representing the abnormality being executed for all the sections of the electronic content for which a reading speed is determined.

In order to calculate an accurate reading speed for the second section of the electronic content based on the reading speed of the other sections of the electronic content, the method of the invention proposes to check if the reading speed of a given section of the electronic content is out of normality, for example because the user's attention was diverted to something else while reading the electronic document. If the reading speed of a section of the electronic content is determined to be abnormal, then the value of the parameter representing the abnormality of the reading speed is set to true.

The method of the invention further comprises the steps :

- of comparing a total number of sections of the electronic content for which the value of the parameter representing abnormality is set to false with a total number of sections of the electronic content,

- when the total number of sections of the electronic content for which the value of the parameter representing abnormality is set to false is greater than or equal to half of the total number of sections of the electronic content, determining the reading speed of the second section using the reading speeds of all the sections of the electronic content for which a reading speed is determined.

A parameter representing the overall abnormality of the electronic content by checking if the number of sections of the electronic content for which the value of the parameter representing the abnormality equals to false is equal to or greater than half or more of the number of sections of the electronic content then the value of the parameter representing the overall abnormality of the electronic content is set to false and hence the electronic content is taken into account for reading speed evaluations.

The method of the invention further comprises the step of weighting of the value of the reading speed determined for the second section by a parameter representing a reliability of the determined reading speed for the second section.

The higher the value of the parameter representing the reliability of the determined reading speed for the second section, the more accurate the determined value of the reading speed for the second section.

The invention relates, as well, to a method for modifying a reading speed of a moving highlight highlighting words in an electronic content comprising at least one section consisting of words, the method comprising the steps of :

- receiving a value of a reading speed for at least a section of the electronic content, the reading speed of the section being a function of the reading speeds of other sections of the electronic content,

- weighting the received value of the reading speed by a predetermined coefficient,

- replacing the current reading speed of the moving highlight by the weighted value of the reading speed for the section of the electronic content.

By providing the e-books reader application a set of reading speed specific to different sections of the electronic content, different reading speeds are applied to the highlight depending on the section displayed.

Thus, the user does not to test and configure the reading speed of each reading material type manually. This contributes to improve the quality of experience of the user.

Another object of the invention concerns a device for determining a reading speed of a section of an electronic content comprising at least one section consisting of words, the device comprising :

- a reading speed and a words count of at least a first section of the electronic content being already known, means for determining a time for reading the first section, called first reading time,

- means for calculating a difference, called time difference, between a time for reading the whole electronic content and at least the first reading time,

- means for determining a reading speed for a second section of the electronic content by dividing a words count for the second section by the time difference.

Finally, one object of the invention concerns computer programs, in particular computer programs on or in an information medium or memory, suitable for implementing the method transmitting a signal carrying data and the communication method object of the invention. These programs can use any programming language, and be in the form of source code, binary code, or of code intermediate between source code and object code such as in a partially compiled form, or in any other desirable form for implementing the methods according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

Moreover, the information medium may be a transmissible medium such as an electrical or optical signal, which may be conveyed via an electrical or optical cable, by radio or by other means. The program according to the invention may in particular be downloaded from a network of Internet type.

The present system and method are explained in further detail, and by way of example, with reference to the accompanying drawings wherein:

FIG. 1 represents an electronic content, here a page from a book, displayed by an electronic device,

FIG. 2 represents an electronic content categorized by its editor,

FIG. 3 represents the steps of a method for determining the reading speed according to invention,

FIG. 4 represents an electronic device embedding an e-books reader application according to the invention:

FIG. 5 represents a module of the electronic device of figure 4 capable of determining the reading speed of a section of the electronic content according to the invention.

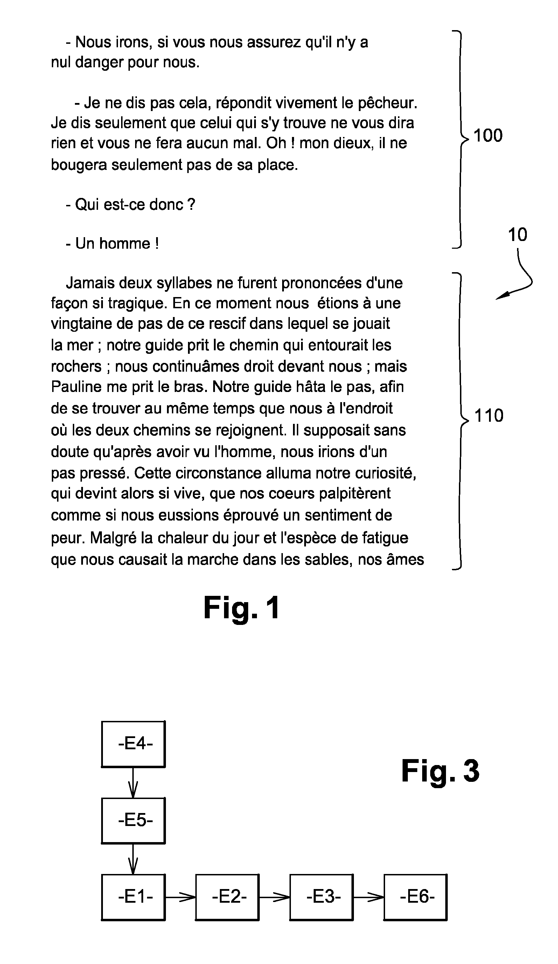

**Figure 1** represents an electronic content 10, here a page from a book, displayed by an electronic device (not represented on the figure) such as a tablet, a smart phone, a personal computer, a laptop etc. Such an electronic device embeds an e-books reader application capable of displaying electronic contents 10 consisting of texts such as books, newspapers, etc.

The electronic content 10 is a page of a book comprising a plurality of sections 100 and 110 consisting of words. These two sections 100 and 110 correspond to different types of reading materials such as normal description, dialogue, poem, formulas, foreign text, etc. In figure 1, the first section 100 corresponds to dialog, and the second section 110 corresponds to normal description.

The sections 100 and 110 corresponding to different reading material types, dialog and description respectively, are categorized in a recognizable metadata format using for example the ePub international standard with XML.

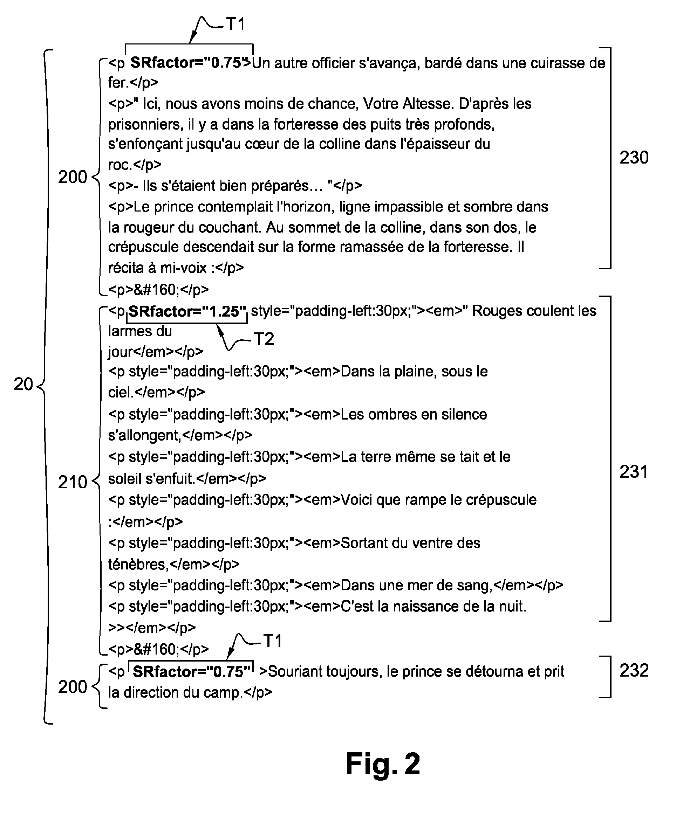

**Figure 2** represents an electronic content 20 comprising three parts 230, 231 and 232. These parts 230, 231, and 232 are identified by a tag $T_1$, $T_2$. Even though the electronic content 20 comprises three parts 230, 231 and 232, the electronic content 20 comprises only two sections 200 and 210. Since the part 230 the part 232 are identified by the same tag $T_1$, i.e. they correspond to the same reading material, they form a same section 200.

In order to improve the quality of experience of a user reading an electronic content 10, 20 using assisted reading feature, a solution for determining a reading speed for each section of an electronic content is proposed. Such a solution enables the highlight to moves through the electronic content at different reading speeds depending on the type of reading material displayed.

**Figure 3** represents the steps of a method for determining the reading speed of each section 100, 110, 200, 210, of an electronic content 10, 20.

It is assumed that there are X different sections, and consequently X types of reading materials, in the electronic content 10, 20, and that the reading speeds of Y sections are already known as $Speed_1$, $Speed_2$... Speedy.

The reading speed of a given section n of the electronic content 10, 20 is given by the following equation :

$$Speed_n = Count_n / (Time - \sum_{m=1, m \neq n}^{Y} \frac{Count_m}{Speed_m})$$ (**Equation 1**)

where *Time* is the total time in minutes monitored for reading the electronic content, e.g. a page of an e-book, and $Count_n$ is the total words count for the section n of the electronic content. $Count_m$ and $Speed_m$ are the corresponding words count and known reading speed for section m of the electronic content.

In a step E1, the time $Time_m$ for reading the section m is calculated based on the values of $Count_m$ and $Speed_m$. These values of $Count_m$ and $Speed_m$ are already known.

During a step E2, a difference D between a time for reading the whole electronic content 10, 20 and the time $Time_m$ is calculated. The time for reading the whole electronic content 10, 20 is for example the duration between two pages flipping when reading an e-book.

The reading speed $Speed_n$ of the section n of the electronic content 10, 20 is then determined, during a step E3, by dividing a words count $Count_n$ for the section n by the difference D.

When the electronic content 10, 20 comprises a plurality of sections m for which the reading speed is already know, the difference D is the difference between the time for reading the whole electronic content 10, 20 and a sum of the reading times $Time_m$ of all the sections m. By taking into account the reading speeds of the sections m, the accuracy of the reading speed *Speedn* of the section n is increased.

If the number of sections with an already known reading speed Y is smaller than the total number of sections X of the electronic content 10, 20 then the reading speed of the X-Y sections of the electronic content are calculated as follows:

$$Speed_{y+1}, Speed_{y+2}, ... Speed_x = \sum_{n=Y+1}^{X} Count_n / (Time - \sum_{m=1}^{Y} \frac{Count_m}{Speed_m}) \text{ (Equation 2)}$$

In order to determine the reading speed of the X-Y sections, the words count *Count$_n$* to be divided by the difference D is the result of a sum of a words count of the X-Y sections of the electronic content 10, 20 for which a reading speed is to be determined.

If the number of sections with an already known reading speed Y is equal to the total number of sections X of the electronic content 10, 20 then that means the reading speed of all different types of reading material are known.

During a step E4, executed before step E1, the value of a parameter representing the abnormality of the reading speed of the section m of the electronic content is determined. In step E4, a difference D1 between the reading speed of the section m with an average reading speed for the section m is compared with a predetermined threshold T.

If the value of the difference D1 is below the predetermined threshold T, the value of the parameter is set to false.

Step E4 is executed for all the sections m of the electronic content 10, 20 for which a reading speed *Speed$_m$* is already known.

Such a technique for determining the value of a parameter representing the abnormality of a reading speed in for example an outlier identification algorithm such as the Chauvenet's criterion.

During a step E5 following step E4, the total number of sections of the electronic content 10, 20 for which the value of the parameter representing abnormality is set to false is compared to the total number X of sections of the electronic content 10, 20.

If the total number of sections of the electronic content 10, 20 for which the value of the parameter representing abnormality is set to false is greater than or equal to half of the total number X of sections of the electronic content 10, 20, then the reading speed *Speed$_n$* of the section n can be calculated using the reading speeds of all the sections m of the electronic content for which a reading speed is determined.

The false value of the parameter representing the abnormality of a reading speed means that the reading speed of a section is out of normality, i.e., the user's attention was diverted to something else while reading the section.

If the total number of sections of the electronic content 10, 20 for which the value of the parameter representing abnormality is set to true is greater than or equal to half of the total number X of sections of the electronic content 10, 20,then the electronic content is discarded, i.e. it is not used is the determination of the reading speed *Speed$_n$* of the section n.

During a step E6, executed after step E3, the value of the reading speed n determined during step E3 is weighted by a parameter representing its reliability according to the following equation :

$$Speed\_updated_n = Speed_n''(1/(Reliability_n + 1)) + Speed_n(1 - 1/(Reliability_n + 1))$$

**(Equation 3)**

where *Speed$_n$* is the reading speed obtained with equation 1 and *Speed$_n$'* is the reading speed obtained with equation 2.

The parameter representing the reliability of the reading speed n is the number of electronic content, for example the number of pages, so far that has been evaluated for each of the sections, i.e. for each reading material type. If there are two sections identified with the same tag in the electronic content, it counts as one electronic content, not two, for the determination of the parameter representing reliability.

The calculated reading speeds can be used in an assisted reading feature to help with recommending reading speeds to the user for the corresponding sections. The moving speed of an highlight displayed by the assisted reading feature is calculated using those recommended reading speeds.

The moving speed of an highlight, for section n of the electronic content 10, 20, is calculated using the following equation :

$$\text{Highlight\_Speed\_n} = Speed_n \times \text{SRfactor}$$

where SRfactor is a coefficient specified in the tags $T_1$, $T_2$, associated to the different sections of the electronic content 20, and $Speed_n$ is the reading speed of section n of the electronic content 10, 20.

In order to calculate the moving speed of the highlight, the value of the reading speed $Speed_n$ of the section n of the electronic content 10, 20, is weighted by a predetermined coefficient SRfactor specified in the tags $T_1$, $T_2$, associated to the different sections of the electronic content 20.

For example, an electronic content 10, 20 contains three sections : normal text, dialogue and poem. The first section 1 consists in 200 words; the second section 2 consists in 50 words and the third section consists in 25. The time for reading the whole electronic content 10, 20 is 4 minutes.

The reading speed of normal text $Speed_1$ and dialogue $Speed_2$ are known as being 100 wpm and 50 wpm respectively, while the reading speed $Speed_3$ of poem is unknown.

An initial value of reading speed $Speed_3$ of poem is calculated according to Equation 1, assuming that the total time spending on reading the page is 4 minutes:

$$Speed_3 = 25/(4-(200/100+(50/50))= 25 \text{ wpm}$$

Assuming that the user has read 19 pages, i.e. 19 electronic contents 10, 20, when they read a twentieth page which contains again the three sections : section 1, section 2 and section 3, the up dated values of the reading speeds of section 1, section 2 and section 3 are 120 wpm for $Speed_1$, 50 wmp for $Speed_2$, and 20 wpm for Speed3.

The value of the parameter representing the reliability is then 20 for section 1, 5 for section 2, and 2 for section 3, i.e. the user read 20 pages of normal text, 5 pages of dialog and 2 pages of poem.

The total time spent on reading the twentieth page is 5 minutes and section 1 comprises 250 words, section 2 comprises 25 words, and section 3 comprises 40 words. Therefore, based on **Equation 1 and 3** the updated reading speed $Speed\_update_1$ of section 1:

$$Speed_1 = 250/(5-(25/50+40/20)= 125 \text{ wpm}$$

$$Speed\_updated_1 = 125 * (1/(19+1)+120*(1-1/(19+1))= 120.25 \text{ wpm}$$

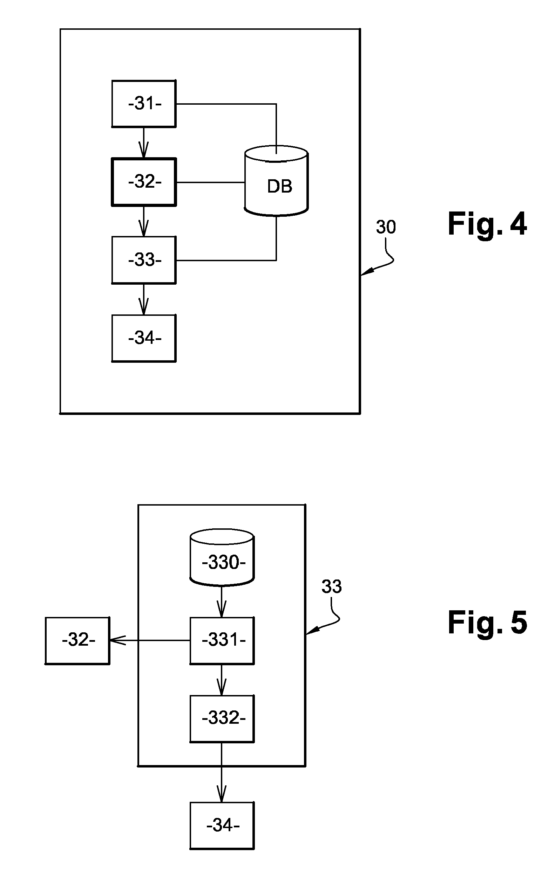

**Figure 4** represents an electronic device 30 embedding an e-books reader application. In order to execute the ebooks-reader application, the electronic device 30 comprises a module 31 capable of displaying electronic contents, such as a page of a book, on a graphical user interface. The displaying module 31 is connected to a module 32 measuring the time necessary for reading the whole electronic content 10, 20, by measuring the duration between two pages flipping when reading an e-book. The module 32 also calculates the total words count for the electronic content.

The module 31 and the module 32 are connected to a database DB comprising electronic contents such as books, newspapers, etc.

A module 33 capable of determining the reading speed of a section of the electronic content 10, 20 is connected to the module 32 and the database DB. The module 33 receives from the module 32 information such as the time necessary for reading the whole electronic content 10, 20 and the total words count for the electronic content.

The module 33 capable of determining the reading speed of a section of the electronic content 10, 20 is connected to a module 34 capable of calculating the moving speed of a highlight in order to improve the reading speed of the user. In order to calculate the moving speed of the highlight, module 34 receives from module 33 the reading speeds determined for each section of the electronic content.

The module 34 is connected to module 31, to which it transmits the value of the moving speed of the highlight for each section n of the electronic content 10, 20. The module 31 then displays the highlight at the specified moving speed.

**Figure 5** represents the module 33 capable of determining the reading speed of a section of the electronic content 10, 20.

A reading speed and a words count of at least a first section m of the electronic content 10, 20 are already stored in storing means 330 of module 33.

Module 33 comprises means 331 for determining a time for reading the first section m, called first reading time.

Means 331 are therefore connected to means 330 and to module 32.

Module 33 comprises means 332 for calculating a difference between a time for reading the whole electronic content and at least the first reading time. Means 332 are connected to means 331.

Module 33 comprises means 333 for determining a reading speed for a second section n of the electronic content by dividing a words count for the second section by the time difference. Means 333 are connected to means 332 and to module 34.

**Claims**

1. A method for determining a reading speed of a section of an electronic content comprising at least one section consisting of words, the method comprising the steps of :

   - a reading speed and a words count of at least a first section of the electronic content being already known, determining a time for reading the first section, called first reading time,
   - calculating a difference, called time difference, between a time for reading the whole electronic content and at least the first reading time,
   - determining a reading speed for a second section of the electronic content by dividing a words count for the second section by the time difference.

2. The method of claim 1, wherein the time difference is the difference between the time for reading the whole electronic content and a sum of the reading times of the sections of the electronic content for which a reading speed is known.

3. The method of claim 1 wherein the words count to be divided by the time difference is the result of a sum of a words count of the sections of the electronic content for which a reading speed is to be determined.

4. The method of claim 1 comprising, prior to determining the reading speed of a section of the electronic content, the step of determining the value of a parameter representing the abnormality of the reading speed of the first section of the electronic content by comparing a difference between the reading speed of the first section with an average reading speed for the first section, with a predetermined threshold, if the value of the difference is below the predetermined threshold, the value of the parameter is set to false; the determining the value of the parameter representing the abnormality being executed for all the sections of the electronic content for which a reading speed is determined.

5. The method of claim 4, further comprising the steps :

   - of comparing a total number of sections of the electronic content for which the value of the parameter representing abnormality is set to false with a total number of sections of the electronic content,
   - when the total number of sections of the electronic content for which the value of the parameter representing abnormality is set to false is greater than or equal to half of the total number of sections of the electronic content, determining the reading speed of the second section using the reading speeds of all the sections of the electronic content for which a reading speed is determined.

6. The method of claim 1, further comprising the step of weighting of the value of the reading speed determined for the second section by a parameter representing a reliability of the determined reading speed for the second section.

7. Method for modifying a reading speed of a moving highlight highlighting words in an electronic content comprising at least one section consisting of words, the method comprising the steps of :

   - receiving a value of a reading speed for at least a section of the electronic content, the reading speed of the section being a function of the reading speeds of other sections of the electronic content,
   - weighting the received value of the reading speed by a predetermined coefficient,
   - replacing the current reading speed of the moving highlight by the weighted value of the reading speed for the section of the electronic content.

8. A device for determining a reading speed of a section of an electronic content comprising at least one section consisting of words, the device comprising :

   - a reading speed and a words count of at least a first section of the electronic content being already known,

## EP 2 608 002 A1

means for determining a time for reading the first section, called first reading time,

- means for calculating a difference, called time difference, between a time for reading the whole electronic content and at least the first reading time,
- means for determining a reading speed for a second section of the electronic content by dividing a words count for the second section by the time difference.

9. A computer program **characterized in that** it comprises program code instructions for the implementation of the steps of the method for determining a reading speed as claimed in claim 1 when the program is executed by a processor.

- Nous irons, si vous nous assurez qu'il n'y a
nul danger pour nous.

- Je ne dis pas cela, répondit vivement le pêcheur.
Je dis seulement que celui qui s'y trouve ne vous dira
rien et vous ne fera aucun mal. Oh ! mon dieux, il ne
bougera seulement pas de sa place.

- Qui est-ce donc ?

- Un homme !

Jamais deux syllabes ne furent prononcées d'une
façon si tragique. En ce moment nous étions à une
vingtaine de pas de ce rescif dans lequel se jouait
la mer ; notre guide prit le chemin qui entourait les
rochers ; nous continuâmes droit devant nous ; mais
Pauline me prit le bras. Notre guide hâta le pas, afin
de se trouver au même temps que nous à l'endroit
où les deux chemins se rejoignent. Il supposait sans
doute qu'après avoir vu l'homme, nous irions d'un
pas pressé. Cette circonstance alluma notre curiosité,
qui devint alors si vive, que nos coeurs palpitèrent
comme si nous eussions éprouvé un sentiment de
peur. Malgré la chaleur du jour et l'espèce de fatigue
que nous causait la marche dans les sables, nos âmes

100

10

110

## Fig. 1

## Fig. 3

-E4-

-E5-

-E1- → -E2- → -E3- → -E6-

T1

```
<p SRfactor="0.75">Un autre officier s'avança, bardé dans une cuirasse de
fer.</p>
<p>" Ici, nous avons moins de chance, Votre Altesse. D'après les
prisonniers, il y a dans la forteresse des puits très profonds,
s'enfonçant jusqu'au cœur de la colline dans l'épaisseur du
roc.</p>
<p>- Ils s'étaient bien préparés... "</p>
<p>Le prince contemplait l'horizon, ligne impassible et sombre dans
la rougeur du couchant. Au sommet de la colline, dans son dos, le
crépuscule descendait sur la forme ramassée de la forteresse. Il
récita à mi-voix :</p>
<p> </p>
```

230

```
<p SRfactor="1.25" style="padding-left:30px;"><em>" Rouges coulent les
larmes du
jour</em></p>
```

T2

```
<p style="padding-left:30px;"><em>Dans la plaine, sous le
ciel.</em></p>
<p style="padding-left:30px;"><em>Les ombres en silence
s'allongent,</em></p>
<p style="padding-left:30px;"><em>La terre même se tait et le
soleil s'enfuit.</em></p>
<p style="padding-left:30px;"><em>Voici que rampe le crépuscule
:</em></p>
<p style="padding-left:30px;"><em>Sortant du ventre des
ténèbres,</em></p>
<p style="padding-left:30px;"><em>Dans une mer de sang,</em></p>
<p style="padding-left:30px;"><em>C'est la naissance de la nuit.
>></em></p>
<p> </p>
```

231

T1

```
<p SRfactor="0.75" >Souriant toujours, le prince se détourna et prit
la direction du camp.</p>
```

232

200 210 20

**Fig. 2**

**Fig. 4**

30

**Fig. 5**

33

Europäisches
Patentamt

European
Patent Office

Office européen
des brevets

# EUROPEAN SEARCH REPORT

Application Number

EP 11 30 6734

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/003428 A1 (DALSTROM TOMAS [SE]) 2 January 2003 (2003-01-02) | 1-3,6,8, 9 | INV. G06F3/048 G06F15/02 G06F17/27 G09B17/00 |
| Y | * paragraph [0034] - paragraph [0036] * * paragraph [0038] * * paragraph [0041] * * paragraph [0045] - paragraph [0047] * | 4,5 | |
| Y | US 2011/112671 A1 (WEINSTEIN PHIL [US]) 12 May 2011 (2011-05-12) * abstract * * paragraph [0023] - paragraph [0024] * * figure 3 * | 4,5 | |
| A | JP 2006 004409 A (MATSUSHITA ELECTRIC IND CO LTD) 5 January 2006 (2006-01-05) * paragraph [0023] - paragraph [0040] * * figures 1-6 * | 1-6,8,9 | |
| A | US 2011/195388 A1 (HENSHALL WILLIAM [US] ET AL) 11 August 2011 (2011-08-11) * abstract * * paragraph [0082] - paragraph [0090] * * figure 7 * | 1-6,8,9 | |
| | | | TECHNICAL FIELDS SEARCHED (IPC) G06F G09B |
| X | WO 00/39776 A1 (DALSTROEM TOMAS [SE]) 6 July 2000 (2000-07-06) * page 7, line 14 - page 8, line 32 * * page 9, line 17 - line 33 * * page 11, line 21 - page 12, line 24 * * figures 1-7 * * claim 3 * | 7 | |
| A | US 2004/080541 A1 (SAIGA HISASHI [JP] ET AL) 29 April 2004 (2004-04-29) * paragraph [0123] - paragraph [0126] * * paragraph [0136] - paragraph [0166] * * figures 3,4,7-11 * | 7 | |

The present search report has been drawn up for all claims

| Place of search | Date of completion of the search | Examiner |
|---|---|---|
| Munich | 28 August 2012 | Hauber, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 11 30 6734

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 11 30 6734

The Search Division considers that the present European patent application does not comply with the
requirements of unity of invention and relates to several inventions or groups of inventions, namely:

1. claims: 1-6, 8, 9

Method, device and computer program for determining a
reading speed of a section of an electronic text
---

2. claim: 7

Method for modifying a speed of a moving highlight
highlighting words
---

**ANNEX TO THE EUROPEAN SEARCH REPORT
ON EUROPEAN PATENT APPLICATION NO.**                    EP 11 30 6734

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2012

| Patent document cited in search report | | Publication date | Patent family member(s) | | Publication date |
|---|---|---|---|---|---|
| US 2003003428 | A1 | 02-01-2003 | AU | 2900501 A | 31-07-2001 |
| | | | EP | 1257988 A1 | 20-11-2002 |
| | | | SE | 518881 C2 | 03-12-2002 |
| | | | SE | 0001034 A | 21-07-2001 |
| | | | US | 2003003428 A1 | 02-01-2003 |
| | | | WO | 0154097 A1 | 26-07-2001 |
| US 2011112671 | A1 | 12-05-2011 | NONE | | |
| JP 2006004409 | A | 05-01-2006 | JP | 4142669 B2 | 03-09-2008 |
| | | | JP | 2006004409 A | 05-01-2006 |
| US 2011195388 | A1 | 11-08-2011 | EP | 2499626 A1 | 19-09-2012 |
| | | | US | 2011195388 A1 | 11-08-2011 |
| | | | WO | 2011060106 A1 | 19-05-2011 |
| WO 0039776 | A1 | 06-07-2000 | AU | 2137400 A | 31-07-2000 |
| | | | EP | 1145214 A1 | 17-10-2001 |
| | | | JP | 2002533855 A | 08-10-2002 |
| | | | SE | 515805 C2 | 08-10-2001 |
| | | | SE | 9804547 A | 24-06-2000 |
| | | | US | 6726487 B1 | 27-04-2004 |
| | | | WO | 0039776 A1 | 06-07-2000 |
| US 2004080541 | A1 | 29-04-2004 | NONE | | |

EPO FORM P0459

For more details about this annex : see Official Journal of the European Patent Office, No. 12/82